# DEMANDE DE BREVET EUROPEEN

(11) **EP 4 660 128 A1**
(43) Date de publication de la demande: **10.12.2025**
(21) Numéro de dépôt: 25180409.2
(22) Date de dépôt: 03.06.2025
(51) Int. Cl.: B67C 7/00

(54) **DISPOSITIF ET MÉTHODE DE TRAITEMENT DE BOUTEILLES**

(30) Priorité: 03.06.2024 CH 5942024
(71) Demandeur: BE WTR SA, 1003 Lausanne (CH)
(72) Inventeur: Lebreton, Etienne, 1023 Crissier (CH); Vuillet, Romain, 1030 Bussigny (CH)
(74) Mandataire: P&TS SA (AG, Ltd.)

(57) **Abrégé**

Dispositif (1) compact de traitement de bouteilles (2) comprenant :

une unité de convoyage (10) automatique de bouteille permettant de déplacer une pluralité de bouteilles le long d'un circuit fermé,

une zone de préhension (11) permettant à un opérateur de placer une bouteille de la pluralité de bouteilles sur l'unité de convoyage et/ou de prendre une bouteille de la pluralité de bouteilles sur l'unité de convoyage,

une station de nettoyage (12) de bouteille,

une station de remplissage (13) de bouteille,

une station d'encapsulation (14) de bouteille,

chacune de ces stations étant disposée le long du circuit fermé, en sorte qu'une bouteille passe successivement par la station de nettoyage, la station de remplissage et la station d'encapsulation lorsqu'elle est déplacée par l'unité de convoyage, la longueur du circuit fermé étant inférieure ou égale à 20m, de préférence inférieure à 15m.

L'invention concerne également une méthode de traitement de bouteilles au moyen dudit dispositif.

## Description

### Domaine technique

La présente invention concerne un dispositif compact de traitement de bouteilles, notamment de nettoyage, remplissage et encapsulation ainsi qu'une méthode mettant en œuvre le dispositif.

### Etat de la technique

Dans le domaine alimentaire, les bouteilles en verre constituent un contenant privilégié pour la plupart des boissons. En effet, le verre possède de nombreux avantages bien connus tant au niveau de la conservation du liquide qu'au niveau de la santé et de l'environnement. A titre d'exemples il peut être cité :
- Sa neutralité chimique : Le verre est un matériau neutre qui ne réagit pas avec le contenu de la bouteille contrairement aux plastiques qui peuvent parfois libérer des substances chimiques.
- Absence de contaminants : Le verre ne contient pas de substances potentiellement nocives telles que les phtalates ou le bisphénol A (BPA) que l'on trouve dans certains plastiques.
- Hygiène : Le verre est plus facile à stériliser et à nettoyer, ce qui réduit le risque de contamination bactérienne.
- Recyclabilité : Le verre est entièrement recyclable et peut être recyclé à l'infini sans perte de qualité ou de pureté. Cela réduit la quantité de déchets envoyés dans les décharges et la demande de matières premières.
- Durabilité : Les bouteilles en verre sont souvent plus durables et peuvent être réutilisées plusieurs fois avant de devoir être recyclées.
- Perception de qualité : Les bouteilles en verre sont souvent perçues comme plus haut de gamme, ce qui peut améliorer l'image de marque des produits qu'elles contiennent.

Parmi tous ces avantages, celui de la durabilité a pris une importance particulière au cours des dernières années au vu des considérations écologiques actuelles. La réutilisation circulaire des bouteilles en verre nécessite cependant l'aménagement, parfois conséquent, de dispositions de traitement de ces bouteilles afin de pouvoir les remettre en circulation.

Plusieurs étapes sont généralement effectuées avant de pouvoir réutiliser une bouteille, notamment :
- un contrôle de l'état de la bouteille (visuel ou automatisé)
- le nettoyage de la bouteille, possiblement avec désinfection.
- le remplissage de la bouteille avec une nouvelle boisson
- l'encapsulation/bouchage au moyen d'une capsule ou d'un bouchon
- possiblement l'impression d'une date de durabilité minimale ou autres informations

Les solutions existantes sont essentiellement divisées en deux catégories d'envergures distinctes. D'une part, il existe des combinaisons de machines arrangées en une « ligne d'embouteillage », généralement à l'échelle industrielle. Bien qu'offrant une grande productivité, ces lignes d'embouteillages nécessitent une importante surface au sol, de l'ordre de plusieurs centaines ou milliers de mètres carrés. Conséquemment, ces lignes sont généralement installées en dehors des centres urbains où la majeure partie de la consommation a lieu. Ainsi il est nécessaire de recourir à un vaste réseau de transport, usuellement par camion, ce qui implique un impact écologique considérable, les sources d'eau ne correspondant généralement pas avec les agglomérations où l'eau est consommée principalement..

D'autre part, il existe des ateliers manuels combinant un lave-bouteille, un robinet et un système d'encapsulation. Dans de tels ateliers, le laveur de bouteilles est souvent un lave-vaisselle amélioré où le rotor de lavage inférieur est remplacé par un quadrillage de jets verticaux indépendant pénétrant dans chaque bouteille. Ainsi chaque bouteille est nettoyée. Le nettoyage et la désinfection ainsi que les séquences de rinçage sont effectués dans une enceinte unique avec une déperdition conséquente de produits chimiques puisqu'il convient entre chaque étape de vider l'enceinte. Il n'existe pas de processus de nettoyage en place (cleaning-in-place) comme dans les des usines d'embouteillage. Le remplissage est fait par une fontaine à eau dont la ligne d'eau est assainie, mais pas désinfectée au même niveau de propreté. Au sortir du lave-vaisselle, la bouteille est manipulée, remplie, puis la capsule est positionnée avec les mains avant d'être sertie.

Certains types d'établissements tels que les hôtels sont à la fois de grands consommateurs de boissons en bouteille. Un hôtel ou un restaurant qui souhaiterait éviter l'utilisation de bouteilles en plastique à usage unique et éviter les transports des bouteilles peut avoir recours à une des alternatives suivantes :
- Intégrer dans le bâtiment un atelier manuel de lave remplissage d'eau filtrée, ou une solution intermédiaire. L'inconvénient principal de cette alternative étant le risque d'hygiène pris par les manipulations manuelles. Le travail de mise en bouteille est peu qualifié, ce qui engendre une rotation importante du personnel et accroît le risque d'hygiène. En outre, le travail manuel engendre une chute de productivité à mettre en perspective du gain de transport des bouteilles.
- Acheter des bouteilles en verre qui seront alors transportées et éventuellement réutilisées, si une source locale le propose. Les bouteilles en verre sont lourdes, ce qui accroit le coût de transport.

Il y a donc un besoin pour des dispositifs compacts permettant un circuit circulaire des bouteilles en évitant les transports. Ces dispositifs doivent pouvoir assurer au moins le lavage, le remplissage et l'encapsulation des bouteilles sans contact humain, en chambre propre, à l'abris des aérosols.

En d'autres termes, il y a un besoin pour des solutions circulaires de nettoyage et remplissage de bouteilles d'eau pouvant être intégrées dans un établissement, à un niveau d'hygiène et de productivité équivalent aux solutions industrielles.

### Bref résumé de l'invention

Un but de la présente invention est de proposer un dispositif de traitement de bouteille exempt des limitations présentes dans l'art antérieur.

Un autre but de l'invention est de proposer un dispositif de traitement de bouteille qui soit à la fois compact et compétitif en termes de rentabilité avec de grandes installations industrielles.

Un autre but de l'invention est de proposer un dispositif de traitement de bouteille compact et compétitif en termes de niveau d'hygiène avec de grandes installations industrielles.

Selon l'invention, ces buts sont atteints notamment au moyen d'un dispositif compact de traitement de bouteilles comprenant :
une unité de convoyage automatique de bouteille permettant de déplacer une pluralité de bouteilles le long d'un circuit fermé,
une zone de préhension permettant à un opérateur de placer une bouteille de la pluralité de bouteilles sur l'unité de convoyage et/ou de prendre une bouteille de la pluralité de bouteilles sur l'unité de convoyage,
une station de nettoyage de bouteille,
une station de remplissage de bouteille,
une station d'encapsulation de bouteille,

chacune de ces stations étant disposée le long du circuit fermé, en sorte qu'une bouteille passe successivement par la station de nettoyage, la station de remplissage et la station d'encapsulation lorsqu'elle est déplacée par l'unité de convoyage,
caractérisé en ce qu'une longueur du circuit fermé est inférieure ou égale à 20m, de préférence inférieure à 15m.

Selon un mode de réalisation, l'unité de convoyage comprend une pluralité de bras de préhension, chaque bras de préhension permettant de supporter une bouteille tout au long du circuit fermé.

Selon un mode de réalisation, chaque bras de préhension comprend un poignet rotatif permettant d'opérer une rotation d'une bouteille disposée sur le bras de préhension.

Selon un mode de réalisation, l'unité de convoyage est configurée pour déplacer la pluralité de bouteilles de manière fractionnée par intervalle de temps entre des positions successives le long du circuit fermé.

Selon un mode de réalisation, l'intervalle de temps est compris entre 5 et 20 secondes.

Selon un mode de réalisation, la zone de préhension est dimensionnée de manière à pouvoir accueillir simultanément un nombre de bras de préhension compris entre 5 et 10.

Selon un mode de réalisation, le circuit fermé est de forme oblongue.

Selon un mode de réalisation, une largeur du dispositif est inférieure à 5m, préférentiellement 4m, et une longueur du dispositif est inférieure à 5m, préférentiellement 4m.

Selon un mode de réalisation, le dispositif comprend au moins une station additionnelle sélectionnée parmi : une station de rinçage, une station de séchage, une station de désinfection et/ou une station d'impression.

Selon un mode de réalisation, le dispositif comprend une enceinte de protection disposée de manière à interdire un accès à l'unité de convoyage depuis l'extérieur du dispositif, à l'exception d'un accès par la zone de préhension.

Selon un mode de réalisation, le dispositif comprend une cabine de surpression, la station de remplissage et la station d'encapsulation étant disposées à l'intérieur de la cabine de surpression.

Selon un mode de réalisation, le dispositif est disposé selon un premier étage et un second étage en-dessus du premier étage, le premier étage comprenant une pluralité de compartiments configurés pour contenir des unités de fonctionnement des stations de nettoyage, de remplissage et/ou d'encapsulation, et le deuxième étage comprenant l'unité de convoyage et les stations de nettoyage, de remplissage et d'encapsulation.

Selon un mode de réalisation, les unités de fonctionnement peuvent comprendre un ou plusieurs des éléments suivants : un récipient pressurisé pour la gazéification d'un liquide, un compresseur, un récipient de produit de nettoyage et/ou un dispositif de filtration de liquide.

Selon un mode de réalisation, la station d'encapsulation comprend une unité de distribution de capsules et une unité de sertissage de capsule.

Selon l'invention, ces buts sont atteints également atteints notamment au moyen d'une méthode de traitement de bouteille comprenant les étapes de :
disposer la bouteille vide sur un bras de préhension dans une zone de préhension d'un dispositif de traitement de bouteille tel que décrit ci-avant,
nettoyer la bouteille vide au moyen d'une station de nettoyage du dispositif de traitement,
remplir la bouteille vide d'un liquide au moyen d'une station de remplissage du dispositif de traitement,
encapsuler la bouteille remplie au moyen d'une station d'encapsulation du dispositif de traitement,
récupérer la bouteille remplie et encapsulée sur le bras de préhension dans la zone de préhension,
les étapes de disposition et de récupération de la bouteille étant effectuées par un opérateur et la bouteille étant déplacée automatiquement le long d'un circuit fermé au moyen d'une unité de convoyage du dispositif de traitement, les stations de nettoyage, remplissage et encapsulation étant disposées le long du circuit fermé.

Selon un mode de réalisation, la méthode comprend une première étape de rotation de la bouteille vide avant l'étape de nettoyage de manière à orienter un goulot de la bouteille dans une direction de nettoyage, et une seconde étape de rotation de la bouteille vide après nettoyage et avant remplissage de manière à orienter le goulot de la bouteille dans une direction de remplissage, les deux étapes de rotation étant réalisées au moyen d'un poignet rotatif du bras de préhension sur lequel est disposée la bouteille.

Selon un mode de réalisation chaque bouteille est tournée de 180° durant la première étape de rotation et de 180° durant la seconde étape de rotation.

### Brève description des figures

Des exemples de mise en œuvre de l'invention sont indiqués dans la description illustrée par les figures annexées dans lesquelles :
- La figure 1 illustre schématiquement un dispositif de traitement de bouteilles selon l'invention.
- La figure 2 illustre schématiquement un dispositif de traitement de bouteilles comprenant différentes stations de traitement optionnelles.

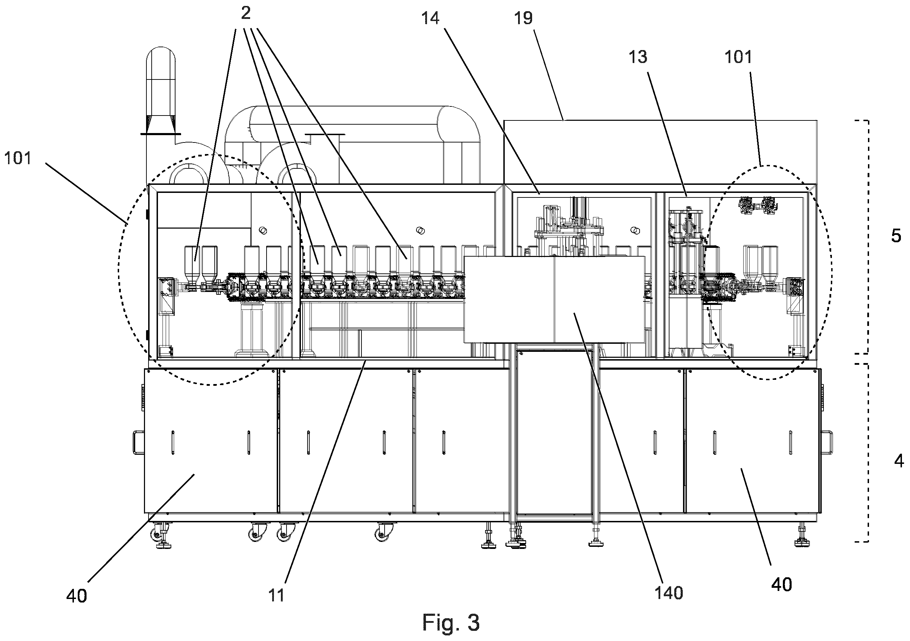

- La figure 3 illustre une vue de face d'un dispositif de traitement de bouteilles selon l'invention.
- La figure 4 illustre une vue de derrière d'un dispositif de traitement de bouteilles selon l'invention.
- Les figures 5 et 6 illustrent des vues en perspective d'un dispositif de traitement de bouteilles selon l'invention.

### Exemple(s) de mode de réalisation de l'invention

La présente invention a trait à un dispositif compact de traitement de bouteilles permettant notamment de procéder au lavage, au remplissage et à l'encapsulation d'une pluralité de bouteilles de manière automatisée. Les dimensions du dispositif, notamment du circuit parcouru par les bouteilles entre l'instant où elles sont disposées sur l'unité de convoyage et le moment où elles en sont retirées, permettent l'intégration du dispositif dans des infrastructures existantes telles que des restaurants ou des hôtels qui ne peuvent pas accueillir des dispositifs d'envergure industrielle.

Le dispositif proposé permet ainsi une réutilisation à circuit court des bouteilles, notamment des bouteilles destinées à la boisson, e.g. eau minérale, eau gazeuse, soda, etc. En effet, il est ainsi possible d'intégrer au sein de l'établissement proposant les boissons, un dispositif permettant une réutilisation complète des bouteilles en évitant avantageusement les coûts économiques et environnementaux liés au transport des bouteilles entre une usine de traitement et le lieu de distribution/consommation.

L'automatisation des étapes de lavage, remplissage et encapsulation au sein d'un même dispositif ainsi que le convoyage automatique des bouteilles permet également d'obtenir un niveau d'hygiène supérieur à celui des dispositifs non-industriels dans lesquels une ou plusieurs de ces étapes sont effectuées par un opérateur manipulant les bouteilles.

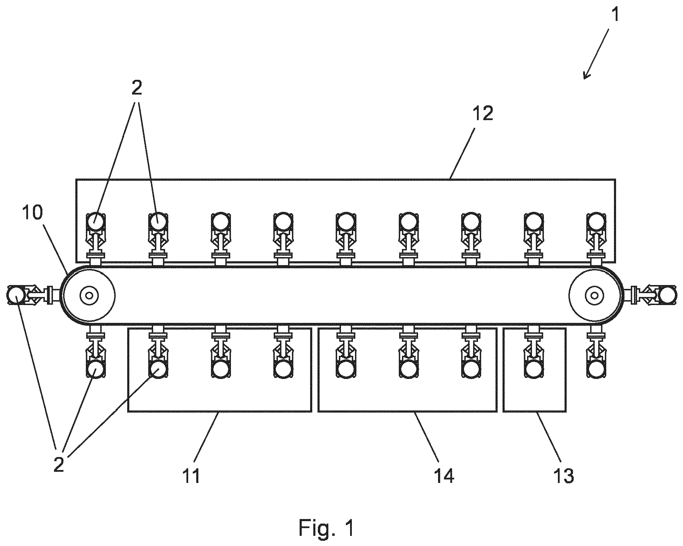

Comme illustré de manière schématique sur la figure 1, le dispositif comprend une unité de convoyage 10 permettant un déplacement des bouteilles le long d'un circuit fermé. Une zone de préhension 11 permet à un opérateur de disposer des bouteilles, typiquement vides et sales, sur l'unité de convoyage 10, ou de récupérer des bouteilles, typiquement propres, remplies et encapsulées depuis l'unité de convoyage 10. L'unité de convoyage 10 est automatisée de sorte que le déplacement des bouteilles le long du circuit fermé s'effectue sans l'intervention d'un opérateur.

Le long de ce circuit fermé sont disposés au moins une station de nettoyage 12 permettant de nettoyer les bouteilles 2 convoyées, une station de remplissage 13 permettant de remplir les bouteilles 2 convoyées avec un liquide, typiquement un liquide de boisson, et une station d'encapsulation 14 permettant de fermer les bouteilles 2 convoyées de manière hermétique au moyen d'un bouchon ou d'une capsule.

De manière avantageuse, la longueur du circuit fermé déterminé par l'unité de convoyage 10 est inférieure ou égale à 20m, voire inférieure ou égale à 15m. Une telle longueur permet une installation du dispositif 1 au sein même des établissements de distribution/consommation des bouteilles. En effet, pour une telle longueur, une surface au sol inférieure à 20m², voire inférieure à 15m² suffit pour accueillir le dispositif de traitement en entier. Selon un mode de réalisation, la longueur du circuit fermé est même inférieure ou égale à 10m et le dispositif 1 ne nécessite qu'au plus 9m² à 10m² pour être installé.

Selon un mode de réalisation, la station de nettoyage 12 fonctionne par giclement intérieur et extérieur de la bouteille 2 au moyen d'un jet d'une solution de détergent, typiquement d'un détergent à base de soude caustique. La solution peut être particulièrement alcaline. La station de nettoyage 12 peut comprendre une unité d'aspiration incluant une turbine afin d'évacuer la solution de détergent.

La station de nettoyage peut comprendre un ou plusieurs jets successifs permettant de gicler l'intérieur et l'extérieur de la bouteille au fur et à mesure qu'elle est déplacée par l'unité de convoyage 10.

La station de remplissage 13 permet de remplir une bouteille d'un liquide, par exemple un liquide de boisson. La station de remplissage 13 comprend donc une ou plusieurs arrivée(s) de liquide, e.g. eau plate, eau gazeuse. Ces arrivées de liquide sont alignées avec les positions des bouteilles 2 sur l'unité de convoyage 10 de manière à permettre le remplissage automatique des bouteilles lorsque leur position correspond à celle d'une arrivée de liquide déterminée.

Selon un mode de réalisation, la station de remplissage comprend plusieurs arrivées d'un même liquide de manière à permettre un remplissage d'une même bouteille en plusieurs étapes successives. Cette solution permet avantageusement de limiter les turbulences lors du remplissage et de maximiser la gazéification dans le cas d'eau gazeuse.

La station d'encapsulation 14 permet de refermer une bouteille 2 après son remplissage au moyen d'une capsule, d'un opercule, d'un bouchon ou de tout autre moyen de fermeture hermétique. L'expression station « d'encapsulation » ne limite donc pas l'invention à une fermeture par capsule, mais permet au contraire d'utiliser tout moyen de fermeture d'une bouteille jugé adéquat par la personne du métier.

Selon un mode de réalisation, la station d'encapsulation 14 comprend une unité de distribution de capsules 140 et une unité de sertissage de capsule 141. Ces deux unités peuvent être disposées consécutivement le long du circuit fermé de manière à ce qu'une bouteille passe en premier par l'unité de distribution de capsules 140 afin qu'une capsule soit disposée sur le goulot de la bouteille, puis dans un second temp par l'unité de sertissage 141 afin que la capsule déposée soit sertie sur le goulot. Les positions de ces deux unités correspondent ainsi à des positions successives d'une bouteille 2 convoyée par l'unité de convoyage 10.

Alternativement, ces deux unités de distribution 140 et sertissage 141 de capsule peuvent être regroupées en un seul module effectuant à la fois la distribution et le sertissage. Selon ce mode de réalisation, la position des unités de distribution 140 et sertissage 141 correspondent à une seule position de la bouteille 2 convoyée.

Selon un mode de réalisation, l'unité de distribution de capsules 140 est un bol vibrant pourvu d'une rampe ou rail permettant de faire glisser une capsule depuis le bol vibrant vers le goulot. Additionnellement, l'unité de distribution peut comprendre un module de désinfection de capsules permettant de désinfecter les capsules durant leur distribution. Par exemple, le module de désinfection permet de désinfecter une capsule par exposition à une radiation UV durant l'acheminement son acheminement jusqu'à la bouteille, typiquement le long d'une rampe ou d'un rail.

Après son passage par les stations de nettoyage, remplissage et encapsulation, une bouteille 2 convoyée par l'unité de convoyage 10 termine son parcours au niveau de la zone de préhension 11 où un opérateur peut la récupérer manuellement ou de manière automatisée.

Comme illustré sur la figure 1, l'unité de convoyage 10 peut avantageusement comprendre une pluralité de bras de préhension 100 permettant chacun de supporter au moins une bouteille 2 tout au long du circuit fermé. Au niveau de la zone de préhension 11, les bouteilles 2 vides et sales sont disposées sur un bras de préhension 100. De manière avantageuse, le bras de préhension est configuré de manière à maintenir la bouteille 2 enserrée afin d'éviter les éventuels mouvements pouvant résulter du convoyage et pouvant causer de chocs.

Selon un mode de réalisation, les bras de préhension 100 comprennent une pince permettant d'enserrer une bouteille 2, par exemple autour de son goulot ou de son corps. Alternativement ou complémentairement, chaque bras de préhension peut comprendre un support inférieur sur lequel une bouteille est déposée.

Selon un mode de réalisation, chaque bras de préhension 100 comprend un poignet rotatif configurer pour permettre une rotation d'une bouteille 2 disposée sur le bras de préhension 100. Cette rotation s'effectue typiquement dans un plan vertical de manière à pouvoir inverser l'orientation de la bouteille au cours de son convoyage, par exemple pour faciliter son nettoyage dans la station de nettoyage 12. Cependant, il est également possible selon les besoins particuliers d'opérer une rotation de la bouteille 2 dans un plan non vertical.

Une telle rotation de la bouteille permet par exemple de faire correspondre l'ouverture du goulot de la bouteille avec un ou plusieurs jet(s) de la station de nettoyage 12. Le lavage de l'intérieur de la bouteille est ainsi facilité. L'orientation de la bouteille, et donc l'angle de rotation du poignet rotatif peut ainsi dépendre de l'orientation du ou des jet(s) de la station de nettoyage.

Alternativement ou complémentairement, la rotation du poignet rotatif permet d'aligner l'ouverture du goulot de la bouteille 2 convoyée avec une ou plusieurs arrivée(s) de liquide dans la station de remplissage 13 de manière à faciliter le remplissage de la bouteille. Il peut par exemple être nécessaire de retourner la bouteille après son remplissage et/ou adapter l'angle du goulot par rapport à l'arrivée de liquide en fonction du type de boisson. E.g. certains liquides gazeux peuvent nécessiter un angle particulier entre le goulot et le jet de liquide afin de minimiser la mousse générée lors du remplissage.

Alternativement ou complémentairement, la rotation du poignet rotatif permet d'aligner l'ouverture du goulot de la bouteille 2 convoyée avec la station d'encapsulation 14. En particulier avec une unité de distribution de capsules 140 et/ou avec une unité de sertissage 141. En effet, les forces de pression exercées sur la bouteille 2 lors de son encapsulation peuvent être importante et nécessiter un alignement adéquat de l'axe longitudinal de la bouteille avec l'outil exerçant la pression afin d'éviter d'endommager la bouteille.

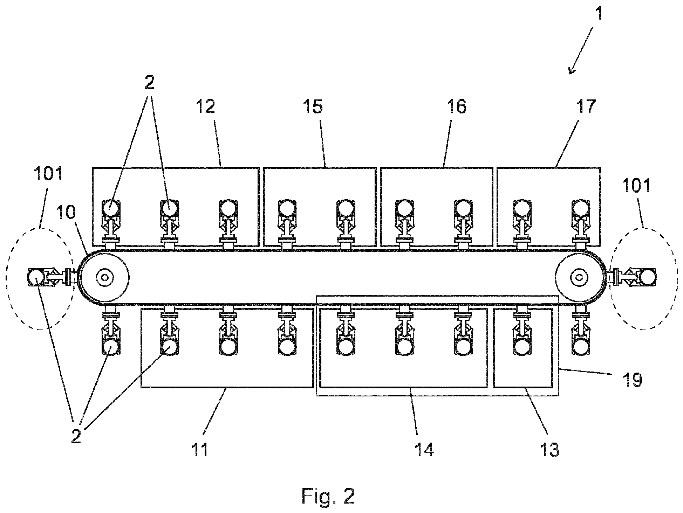

Le circuit fermé peut donc comprendre des zones de rotation 101 des bouteilles par rotation du poignet rotatif du bras de préhension 100. Ces zones de rotation 101 sont avantageusement situées en dehors des stations de nettoyage, remplissage et encapsulation afin d'éviter tout contact avec des éléments de ces stations. Comme illustré sur les figures 1 et 2, ces zones de rotation 101 peuvent avantageusement être situées aux extrémités longitudinales du circuit fermé déterminé par l'unité de convoyage 10.

Ainsi, selon un mode de réalisation un opérateur dispose une bouteille 2 vide et sale sur un bras de préhension 100 de l'unité de convoyage 10 dans la zone de préhension 11 de sorte que l'ouverture du goulot soit dirigée vers le haut, ensuite la bouteille 2 est convoyée jusque vers la zone de rotation 101 précédant la station de nettoyage 12 où elle est tournée par rotation du poignet rotatif du bras de préhension de manière à aligner l'ouverture du goulot avec un ou plusieurs jet(s) de la station de nettoyage 12. Après son nettoyage, la bouteille est convoyée jusqu'à une deuxième zone de rotation 101 où elle est à nouveau tournée par rotation du poignet rotatif du bras de préhension de manière à aligner l'ouverture du goulot avec un ou plusieurs arrivée(s) de liquide de la station de remplissage 13.

Ces rotations sont typiquement de l'ordre de 180° chacune de manière à retourner intégralement chaque bouteille dans les zones de rotation 101. Cependant, d'autres orientations peuvent être réalisées au moyen du poignet rotatif, notamment afin d'aligner la bouteille avec certains éléments du dispositif de traitement ou en fonction de la forme de la bouteille.

Selon un mode de réalisation, le poignet rotatif permet non seulement une rotation non seulement dans un premier plan (e.g. un plan vertical comme décrit ci-dessus), mais également dans un second plan (e.g. perpendiculaire au premier plan), voire permet une rotation à 360° de la bouteille de manière à obtenir virtuellement n'importe quelle inclinaison.

Afin de limiter les pertes de liquide de nettoyage et/ou de liquide de remplissage et/ou afin de faciliter l'encapsulation, l'unité de convoyage peut être configurée de manière à opérer un déplacement fractionné des bouteilles plutôt que continu. Ainsi, chaque bouteille est déplacée le long du circuit fermé entre deux positions successive par intervalle de temps. De cette manière, chaque bouteille reste un temps prédéterminé à chaque position de sorte que les étapes de nettoyage, remplissage et encapsulation peuvent être effectuées lorsque la bouteille est à l'arrêt sur une position. Les jets de nettoyage et/ou remplissage peuvent ainsi être interrompus lorsque les bouteilles sont en mouvement de sorte à éviter les pertes.

Selon un mode de réalisation, l'unité de convoyage 10 est configurée pour alterner une phase de déplacement de bouteille entre deux positions successives et une phase d'arrêt d'un intervalle de temps compris entre 5 secondes et 20 secondes, de manière préférentielle d'un intervalle de temps d'environ 10 secondes.

La zone de préhension 11 peut être dimensionnée en sorte à pouvoir rendre accessible simultanément un nombre de bouteilles compris entre 5 et 10, typiquement 6 ou 7 bouteilles. De cette manière, un opérateur possède assez de temps pour saisir une bouteille vide et sale, la placer sur l'unité de convoyage 10, saisir une bouteille propre et pleine sur l'unité de convoyage et la placer sur un dispositif annexe.

La zone de préhension 11 telle que décrite permet également avantageusement de supprimer le besoin de table d'accumulation comme dans les dispositifs industriels. Ainsi, il est possible d'augmenter la compacité du dispositif en supprimant un élément habituellement volumineux.

Selon un mode de réalisation illustré sur les figures 1 et 2, le circuit fermé parcouru par les bouteilles 2 sur l'unité de convoyage 10 peut être arrangé sous forme d'une boucle oblongue. La disposition des différentes unités et stations peut varier le long de ce circuit oblong en préservant l'ordre suivant : zone de préhension 11, station de nettoyage 12, station de remplissage 13, station d'encapsulation 14 et zone de préhension 11.

Comme illustré sur la figure 2, la station de nettoyage et d'éventuelles autres stations liées au nettoyage (trempage, séchage, désinfection, etc.) peuvent être disposées le long d'un premier côté du circuit oblong et les stations de remplissage 13 et encapsulation 14 ainsi que la zone de préhension 11 peuvent être disposées le long d'un second côté du circuit oblong.

Cela permet avantageusement de séparer les arrivées/sorties de liquide de nettoyage, de détergent, de désinfectant et/ou d'air chaud, etc. des arrivées/sorties de liquide de boisson et des éléments d'encapsulation (e.g. capsules/bouchons, rampe de distribution des capsules, etc.) afin de séparer le circuit en un côté dédié au lavage pouvant correspondre à un premier standard d'hygiène et un côté dédié aux opérations de remplissage et d'encapsulation correspondant à un second standard d'hygiène supérieur ou inférieur au premier standard d'hygiène.

Cette boucle oblongue peut par exemple s'étendre entre deux extrémités correspondant aux zone de rotation 101 des bouteilles lorsque l'unité de convoyage 10 comprend de telles zones.

Les longs côtés du circuit fermé sont avantageusement d'une longueur comprise entre 2m et 6m.

Plus généralement, les dimensions extérieures (longueur et largeur) du dispositif de traitement 1 n'excèdent pas 5mx5m, préférentiellement 4mx4m, voire 3mx3m selon certains mode de réalisation. Ces dimensions extérieures permettent avantageusement au dispositif 1 d'être installé dans des pièces existantes de dimensions usuelles ne nécessitant ainsi aucun aménagement particulier au niveau de la surface. Ce cas de figure est fréquent pour des établissements tels que des restaurants, des hôtels, etc. ne disposant pas d'une surface au sol extensible à l'envi. Le dispositif peut ainsi être intégré dans une pièce, e.g. une cuisine, un local technique, etc.

Comme illustré sur la figure 2, le dispositif de traitement 1 peut inclure de manière optionnelle une ou plusieurs des stations suivantes : une station de rinçage 15, une station de séchage 16, une station de désinfection 17 et/ou une station d'impression (non représentée).

Le dispositif 1 peut inclure une ou plusieurs station(s) de rinçage 15 permettant de rincer l'intérieur et/ou l'extérieur des bouteilles après un passage dans la station de nettoyage 12. La station de rinçage peut inclure une arrivée de liquide de rinçage (typiquement de l'eau filtrée pour éviter les traces de résidus).

Le dispositif 1 peut inclure une ou plusieurs station(s) de séchage 16 permettant de sécher une bouteille 2 après son passage dans la station de nettoyage 12 et/ou de rinçage 15. La station de séchage peut comprendre une soufflerie. Un tel dispositif de séchage permet notamment d'éviter les éventuelles traces de goutte (résidus calcaire).

Le dispositif 1 peut inclure une ou plusieurs station(s) de désinfection 17 permettant de désinfecter une bouteille 2 après son passage dans la station de nettoyage 12, de rinçage 15 et/ou de séchage 16. La station de désinfection peut comprendre une arrivée/sortie d'une solution de désinfection permettant de désinfecter l'intérieur et/ou l'extérieur de la bouteille 2. Il s'agit par exemple d'une solution acide. La station de désinfection peut également comprendre des moyens d'aspiration tels qu'une turbine d'aspiration permettant d'évacuer les vapeurs de la solution.

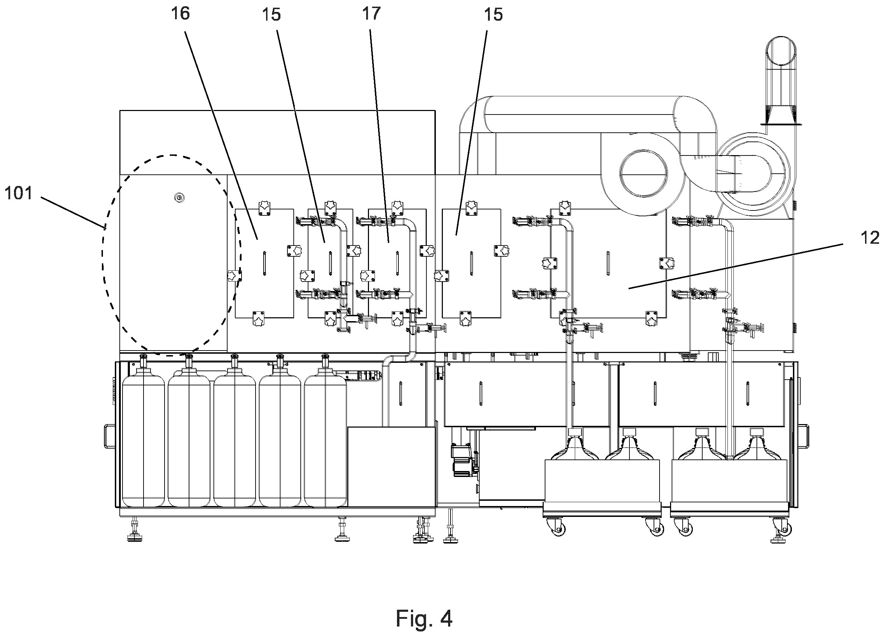

Selon un mode de réalisation illustré sur la figure 4, le dispositif de traitement 1 comprend une première station de rinçage 15 disposée de manière contigüe à la station de nettoyage 12 ainsi qu'une deuxième station de rinçage 15 disposée après la station de désinfection 17. Finalement, une station de séchage 16 est disposée consécutivement à la deuxième station de rinçage 15.

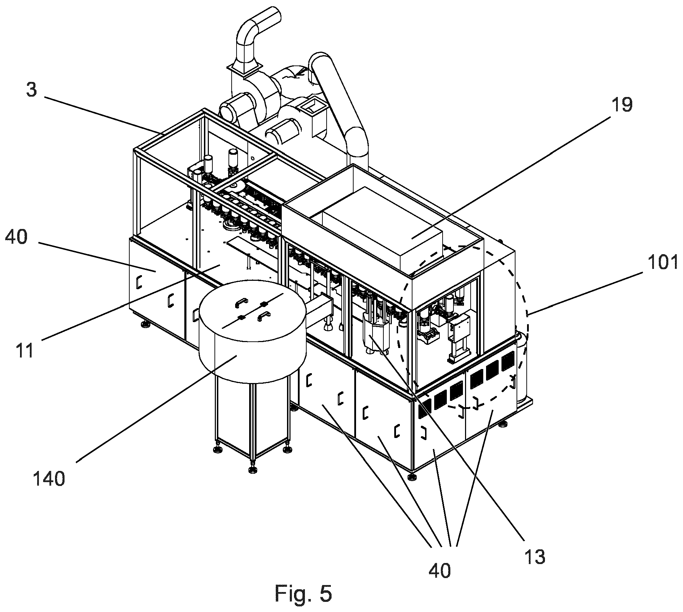

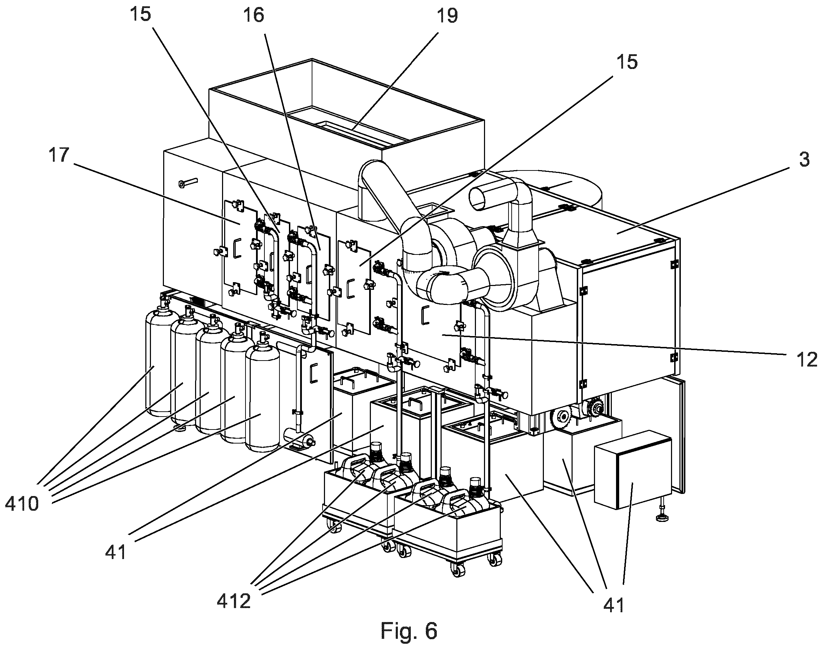

Comme illustré sur les figures 5 et 6, le dispositif de traitement 1 peut comprendre avantageusement une enceinte de protection 3 dispo disposée de manière à interdire un accès à l'unité de convoyage 10 depuis l'extérieur du dispositif, à l'exception d'une ou plusieurs zones dédiées. Il résulte de la présence de cette enceinte de protection un niveau d'hygiène amélioré et comparable à celui d'installations industrielles de traitement de bouteilles. En effet, dans le cadre de la présente invention, les opérations de nettoyage, remplissage et encapsulation, ainsi que d'éventuelles autres opérations de désinfection, rinçage, séchage, impression, etc. ne nécessitent pas d'intervention externe de la part d'un opérateur. Il est ainsi possible d'augmenter le niveau d'hygiène du dispositif 1 en interdisant l'accès à l'unité de convoyage 10 en dehors de zone explicitement dédiée à la manipulation des bouteilles par un opérateur. Par exemple, la zone de préhension peut constituer une zone, voire l'unique zone, de manipulation des bouteilles 2. La contamination par manipulation directe est ainsi réduite au minimum durant le cycle de nettoyage-remplissage-encapsulation de chaque bouteille.

Selon un mode de réalisation illustré sur les figures 5 et 6, l'enceinte de protection 3 peut comprendre une armature supportant une pluralité de vitres de protection interdisant latéralement et/ou par en-dessus/dessous l'accès à l'unité de convoyage 10, à l'exception d'un accès par la zone de préhension 11.

Alternativement ou en complément de l'enceinte de protection 3, le dispositif de traitement 1 peut également comprendre une cabine de surpression 19 permettant à au moins une des opérations de remplissage ou d'encapsulation d'être effectuée dans un environnement de surpression afin de limiter la contamination bactérienne. Une telle cabine 19, illustrée sur les figures 5 et 6, permet d'assurer que la pression de la zone enclose par la cabine 19 est plus élevée que la pression à l'extérieur, ce qui rend la pénétration de bactérie au sein de cette zone difficile, voire impossible. Ainsi, les stations de remplissage 13 et/ou d'encapsulation 14 peuvent être avantageusement disposées à l'intérieur de la cabine de surpression 19.

La cabine de surpression 19 peut être munie d'un dispositif de filtration d'air pour limiter encore davantage la contamination. Par exemple la cabine de surpression peut comprendre un filtre EPA (Efficiency Particulate Air) permettant de filtrer les particules aériennes.

Selon un autre aspect de l'invention, le dispositif de traitement 1 de bouteilles est arrangé selon un premier étage 4 et un second étage 5 en-dessus du premier étage. Le premier étage comprend une pluralité de compartiments 40 configurés pour contenir des unités de fonctionnement 41 des stations de nettoyage 12, de remplissage 13 et/ou d'encapsulation 14 Le deuxième étage comprend l'unité de convoyage 10 et les stations de nettoyage 12, de remplissage 13 et d'encapsulation 14.

Cet arrangement en plusieurs étages permet notamment de diminuer l'empreinte du dispositif, c'est-à-dire la surface au sol nécessaire à son fonctionnement. En effet, le premier étage 4 comprend les unités de fonctionnement des stations (12,13,14) du dispositif disposées quant à elles au deuxième étage 5. De cette manière, une économie de surface conséquente peut être réalisée.

Les unités de fonctionnement 41 peuvent contenir un ou plusieurs des éléments suivants : un récipient pressurisé pour la gazéification d'un liquide 410, un compresseur 411, un récipient de produit de nettoyage 412 et/ou un dispositif de filtration de liquide 413, une pompe (pour liquide ou pour aération), des éléments électriques et/ou électroniques d'alimentation et/ou de contrôle/commande des différentes stations (12,13,14).

Selon un mode de réalisation illustré sur la figure 6, plusieurs récipients pressurisés 410 sous la forme de bouteilles de CO2 sont disposées sur le premier étage 4. Ces récipients sont dédiés à la gazéification d'un liquide de boisson (typiquement de l'eau) dont les bouteilles 2 sont remplies dans la station de remplissage 13. Plusieurs récipients de produit de nettoyage 412 peuvent également être disposés au niveau du premier étage 4 dans des compartiments 40 ou à l'extérieur.

La présente invention concerne également une méthode de traitement de bouteilles comprenant les étapes suivantes :
disposer une bouteille 2 vide sur un bras de préhension 100 dans une zone de préhension 10 d'un dispositif 1 de traitement de bouteille tel que décrit plus haut,
nettoyer la bouteille 2 vide au moyen de la station de nettoyage 12,
remplir la bouteille 2 vide d'un liquide au moyen de la station de remplissage 13,
encapsuler la bouteille 2 remplie au moyen de la station d'encapsulation 14,
récupérer la bouteille 2 remplie et encapsulée sur le bras de préhension 100 dans la zone de préhension 11.

Les étapes de disposition et de récupération de la bouteille sont effectuées par un opérateur et la bouteille est déplacée automatiquement le long du circuit fermé au moyen de l'unité de convoyage 10. Les stations de nettoyage 12, remplissage 13 et encapsulation 14 sont disposées le long du circuit fermé comme décrit plus haut.

Des étapes optionnelles de rotation des bouteilles placées sur les bras de préhension 100 peuvent être exécutées, notamment pour permettre d'orienter les goulots des bouteilles dans une direction de nettoyage, e.g. correspondant à une orientation de jets de nettoyage dans la station de nettoyage 12, ou pour permettre d'orienter les goulots dans une direction de remplissage, e.g. correspondant à une orientation de jet de remplissage dans la station de remplissage 13. Ces étapes de rotations sont effectuées par chaque bras de préhension au moyen d'un poignet rotatif tel que décrit plus haut. Ces rotations sont effectuées dans les zones de rotation 101.

Selon un mode de réalisation, chaque bouteille est tournée de 180° durant la première étape de rotation et de 180° durant la seconde étape de rotation.

### Numéros de référence employés sur les figures

- 1: Dispositif de traitement de bouteilles
- 10: Unité de convoyage
- 100: Bras de préhension
- 101: Zone de rotation
- 11: Zone de préhension
- 12: Station de nettoyage
- 13: Station de remplissage
- 14: Station d'encapsulation
- 140: Unité de distribution de capsules
- 141: Unité de sertissage de capsules
- 15: Station de rinçage
- 16: Station de séchage
- 17: Station de désinfection
- 18: Station d'impression
- 19: Cabine de surpression
- 2: Bouteille
- 3: Enceinte de protection
- 4: Premier étage
- 40: Compartiment
- 41: Unité de fonctionnement
- 410: Récipient pressurisé
- 411: Compresseur
- 412: Récipient de produit de nettoyage
- 413: Dispositif de filtration
- 5: Second étage

## Revendications

1. Dispositif compact de traitement de bouteilles (1) comprenant :
une unité de convoyage (10) automatique de bouteille permettant de déplacer une pluralité de bouteilles (2) le long d'un circuit fermé,
une zone de préhension (11) permettant à un opérateur de placer une bouteille (2) de la pluralité de bouteilles sur l'unité de convoyage (10) et/ou de prendre une bouteille (2) de la pluralité de bouteilles sur l'unité de convoyage (10),
une station de nettoyage de bouteille (12),
une station de remplissage de bouteille (13),
une station d'encapsulation de bouteille (14),
chacune de ces stations étant disposée le long du circuit fermé, en sorte qu'une bouteille (2) passe successivement par la station de nettoyage (12), la station de remplissage (13) et la station d'encapsulation (14) lorsqu'elle est déplacée par l'unité de convoyage (10),
**caractérisé en ce qu'**une longueur du circuit fermé est inférieure ou égale à 20m, de préférence inférieure à 15m.

2. Dispositif selon la revendication 1, l'unité de convoyage (10) comprenant une pluralité de bras de préhension (100), chaque bras de préhension permettant de supporter une bouteille (2) tout au long du circuit fermé.

3. Dispositif selon la revendication 2, chaque bras de préhension (100) comprenant un poignet rotatif permettant d'opérer une rotation d'une bouteille (2) disposée sur le bras de préhension (100).

4. Dispositif selon l'une des revendications précédentes, l'unité de convoyage (10) étant configurée pour déplacer la pluralité de bouteilles (2) de manière fractionnée par intervalle de temps entre des positions successives le long du circuit fermé.

5. Dispositif selon la revendication 4, l'intervalle de temps étant compris entre 5 et 20 secondes.

6. Dispositif selon l'une des revendications précédents, la zone de préhension (11) étant dimensionnée de manière à pouvoir accueillir simultanément un nombre de bras de préhension (100) compris entre 5 et 10.

7. Dispositif selon l'une des revendications précédentes, le circuit fermé étant de forme oblongue.

8. Dispositif selon l'une des revendications précédentes, une largeur du dispositif (1) étant inférieure à 5m, préférentiellement 4m, et une longueur du dispositif (1) étant inférieure à 5m, préférentiellement 4m.

9. Dispositif selon l'une des revendications précédentes, comprenant au moins une station additionnelle sélectionnée parmi : une station de rinçage (15), une station de séchage (16), une station de désinfection (17) et/ou une station d'impression (18).

10. Dispositif selon l'une des revendications précédentes, comprenant une enceinte de protection (3) disposée de manière à interdire un accès à l'unité de convoyage (10) depuis l'extérieur du dispositif (1), à l'exception d'un accès par la zone de préhension (11).

11. Dispositif selon l'une des revendications précédentes, comprenant une cabine de surpression (19), la station de remplissage (13) et la station d'encapsulation (14) étant disposées à l'intérieur de la cabine de surpression (19).

12. Dispositif selon l'une des revendications précédentes, le dispositif étant disposé selon un premier étage (4) et un second étage (5) en-dessus du premier étage, le premier étage comprenant une pluralité de compartiments (40) configurés pour contenir des unités de fonctionnement (41) des stations de nettoyage (12), de remplissage (13) et/ou d'encapsulation (14), et le deuxième étage comprenant l'unité de convoyage (10) et les stations de nettoyage (12), de remplissage (13) et d'encapsulation (14).

13. Dispositif selon la revendication 12, les unités de fonctionnement (41) comprenant un ou plusieurs des éléments suivants : un récipient pressurisé pour la gazéification d'un liquide (410), un compresseur (411), un récipient de produit de nettoyage (412) et/ou un dispositif de filtration de liquide (413).

14. Dispositif selon l'une des revendications précédentes, la station d'encapsulation (14) comprenant une unité de distribution de capsules (140) et une unité de sertissage de capsule (141).

15. Méthode de traitement de bouteille comprenant les étapes de :
disposer la bouteille (2) vide sur un bras de préhension (100) dans une zone de préhension (11) d'un dispositif (1) de traitement de bouteille selon l'une des revendications 1 à 13,
nettoyer la bouteille (2) vide au moyen d'une station de nettoyage (12) du dispositif de traitement (1),
remplir la bouteille (2) vide d'un liquide au moyen d'une station de remplissage (13) du dispositif de traitement (1),
encapsuler la bouteille (2) remplie au moyen d'une station d'encapsulation (14) du dispositif de traitement (1),
récupérer la bouteille (2) remplie et encapsulée sur le bras de préhension (100) dans la zone de préhension (11),
les étapes de disposition et de récupération de la bouteille étant effectuées par un opérateur et la bouteille étant déplacée automatiquement le long d'un circuit fermé au moyen d'une unité de convoyage (10) du dispositif de traitement, les stations de nettoyage (12), remplissage (13) et encapsulation (14) étant disposées le long du circuit fermé.

16. Méthode selon la revendication 15, comprenant une première étape de rotation de la bouteille vide avant l'étape de nettoyage de manière à orienter un goulot de la bouteille dans une direction de nettoyage, et une seconde étape de rotation de la bouteille vide après nettoyage et avant remplissage de manière à orienter le goulot de la bouteille dans une direction de remplissage, les deux étapes de rotation étant réalisées au moyen d'un poignet rotatif du bras de préhension (100) sur lequel est disposée la bouteille.

17. Méthode selon la revendication 16, la bouteille étant tournée de 180° durant la première étape de rotation et de 180° durant la seconde étape de rotation.
